# EUROPÄISCHE PATENTANMELDUNG

(11) **EP 4 571 442 A1**
(43) Veröffentlichungstag der Anmeldung: **18.06.2025**
(21) Anmeldenummer: 24212410.5
(22) Anmeldetag: 12.11.2024
(51) Int. Cl.: G05B 19/418

(54) **ERZEUGUNG UND/ODER MODIFIZIERUNG VON FUNKTIONSEINHEITEN**

(30) Priorität: 15.12.2023 DE 102023135369
(71) Anmelder: Analytik Jena GmbH+Co. KG, 07745 Jena (DE)
(72) Erfinder: Böttcher, Lars, 34212 Melsungen (DE)
(74) Vertreter: Endress + Hauser Group Services (Deutschland) AG+Co. KG

(57) **Zusammenfassung**

Die Erfindung offenbart ein Verfahren zur Erzeugung und/oder Modifizierung von Funktionseinheiten (3, 4, 5, 6, 7, X) und/oder von Realisierungsplänen (RP, RP`, RPx). Nutzern (A, B) wird ein Kommunikationskanal (CH1, CH2, CH3) bereitgestellt und darüber übermittelte Daten (D, D', D", ND) werden verarbeitet und ein Identifikationsergebnis (V) wird erzeugt. Ausgehend von dem Identifikationsergebnis (V) werden fehlende Funktionseinheiten (X) erzeugt und/oder Eigenschaften von vorhandenen Funktionseinheiten (3, 4, 5, 6, 7, 8) modifiziert und/oder fehlende Realisierungsplänen (RPx) erzeugt und/oder vorhandene Realisierungspläne (RP) modifiziert. Weiterhin bezieht sich die Erfindung auf eine Plattform (P).

## Beschreibung

Die Erfindung betrifft ein Verfahren zur Erzeugung und/oder Modifizierung von Funktionseinheiten für eine modulare Anlage zur Behandlung und/oder Analyse einer Probe und/oder von Funktionseinheiten für eine modulare Anlage der Prozess- und Automatisierungstechnik und/oder zur Erzeugung und/oder Modifizierung von Realisierungsplänen, die eine Umsetzung von Analyse- und/oder Bearbeitungs-Protokollen in modularen Anlagen beschreiben. Weiterhin betrifft die Erfindung eine Plattform zur Ausführung des Verfahrens.

In der modernen Technik geht die Tendenz immer stärker in Richtung Modularität, die eine optimale Individualisierung und auch einen vereinfachten Austausch von Komponenten bzw. Modulen erlaubt. Das Denken in Bezug auf die Modularität erstreckt sich dabei auch auf große und komplexe Analyse- oder Prozessanlagen, die jeweils in einzelne Funktionseinheiten heruntergebrochen werden. Hierfür müssen passende Module vorhanden sein.

Weiterhin zeigt sich, dass Nutzer immer stärker daran interessiert sind, Anlagen oder Prozesse selbständig zu beherrschen und sich die notwendigen Module auszuwählen. Dies kann z. B. auch daran liegen, dass so Protokolle, die z. B. in einer Anlage aus Funktionseinheiten umgesetzt werden sollen, nicht einem Anlagenbauer mitgeteilt werden müssen. Hierfür müssen dem Nutzer Daten passend zur Verfügung gestellt werden, sodass er Anlagen selbsttätig plan kann.

Die Autonomie des Nutzers kann jedoch dazu führen, dass bei einem Hersteller von Modulen das Wissen über die Bedürfnisse und Problematiken der Nutzer nicht optimal vorhanden ist. Daher kann es sein, dass erforderliche Module fehlen oder dass die vorhandenen Module für die Anwendung verbesserungswürdig sind, ohne dass der Hersteller dies weiß. Entsprechendes gilt für die Thematik, dass dem Nutzer für seine Anwendungszwecke die passenden Module vorgeschlagen und ihm daher die Planung einer Anlage erleichtert werden kann.

Die der Erfindung zugrundeliegende Aufgabe besteht daher darin, für einen auseichenden Informationsfluss zwischen Anwendern und Herstellern von Komponenten von Anlagen zu sorgen.

Die Erfindung löst die Aufgabe durch ein Verfahren zur Erzeugung und/oder Modifizierung von Funktionseinheiten für eine modulare Anlage zur Behandlung und/oder Analyse einer Probe und/oder von Funktionseinheiten für eine modulare Anlage der Prozess- und Automatisierungstechnik und/oder zur Erzeugung und/oder Modifizierung von Realisierungsplänen, die eine Umsetzung von Analyse- und/oder Bearbeitungs-Protokollen in modularen Anlagen beschreiben, wobei das Verfahren zumindest die folgenden Schritte umfasst: dass für Nutzer mindestens ein Kommunikationskanal für ein Übermitteln von Daten bereitgestellt wird, dass über den Kommunikationskanal übermittelte Daten verarbeitet und ein Identifikationsergebnis dahingehend erzeugt wird, ob Funktionseinheiten fehlen und/oder ob Eigenschaften von vorhandenen Funktionseinheiten zu modifizieren sind und/oder ob Realisierungspläne fehlen und/oder ob vorhandene Realisierungspläne zu modifizieren sind, und dass ausgehend von dem Identifikationsergebnis fehlende Funktionseinheiten erzeugt und/oder Eigenschaften von vorhandenen Funktionseinheiten modifiziert und/oder fehlende Realisierungsplänen erzeugt und/oder vorhandene Realisierungspläne modifiziert werden.

Die Funktionseinheiten seien somit allgemein als Module oder Komponenten verstanden, die in Anlagen der Untersuchung und/oder Aufbereitung von Proben oder in Anlagen der Prozess- und Automatisierungstechnik zur Anwendung kommen.

Das Verfahren dient je nach Ausgestaltung der Erzeugung und/oder der Modifizierung von Funktionseinheiten für eine modulare Anlage zur Behandlung und/oder Analyse einer Probe (dies umfasse dabei den Bereich Robotik, um z. B. eine Probe zu bewegen). Alternativ oder ergänzend dient das Verfahren der Erzeugung und/oder Modifizierung von Funktionseinheiten für eine modulare Anlage der Prozess- und Automatisierungstechnik. Alternativ oder ergänzend dient das Verfahren der Erzeugung und/oder Modifizierung von Realisierungsplänen, die eine Umsetzung von Analyse- und/oder Bearbeitungs-Protokollen in modularen Anlagen beschreiben. Die Anwendung liegt also beispielsweise im Laborbereich als Teil von Life Science oder Pharmazie. Die Anwendung kann jedoch auch als Teil der Überwachung oder Regelung von Prozessgrößen innerhalb einer Prozessanlage erfolgen.

Bei dem erfindungsgemäßen Verfahren werden Nutzern Kommunikationskanäle angeboten. Mit diesen können die Nutzer untereinander oder auch z. B. mit einer bereitgestellten Plattform kommunizieren.

Über die Kommunikationskanäle werden Daten übertragen. Die Daten beziehen sich z. B. auf Eigenschaften von Funktionseinheiten, auf die Anordnung von Funktionseinheiten relativ zueinander, auf Protokolle, die mit Funktionseinheiten oder in Anlagen, die aus Funktionseinheiten gebildet sind, abgearbeitet werden sollen oder z. B. auch auf Fragestellungen oder Herausforderungen, mit denen die Nutzer konfrontiert sind. Die Kommunikationskanäle erlauben z. B. eine Mail-, Chat-, Video- oder Telefonie-Kommunikation. Beispielsweise ist ein Kommunikationskanal nach einer Anmeldung bei einer Homepage verfügbar. Alternativ oder ergänzend ergibt sich beispielweise ein Kommunikationskanal durch das Annehmen einer Einladung zu einer Audio/Video-Konferenz oder zu einer Social Media-Plattform.

Die Daten, die also unterschiedlichste Informationen tragen können, werden z. B. von einer übergeordneten Einheit, die beispielsweise Teil der Plattform ist, verarbeitet. Bei der Verarbeitung wird ein Identifikationsergebnis erzeugt. Das Ergebnis bezieht sich insbesondere auf die Identifikation, ob eine Funktionseinheit fehlt oder ob eine vorhandene Funktionseinheit in zumindest einer Eigenschaft zu verändern ist oder ob ein Realisationsplan fehlt oder ob ein vorhandener Realisationsplan zu modifizieren ist. Ein Realisationsplan beschreibt dabei, wie ein Protokoll für die Analyse- und/oder Bearbeitung von Proben in einer Anlage umgesetzt wird. Es handelt sich also quasi um eine Art von Bauplan für eine Anlage, in der das Protokoll abgearbeitet wird. Der Realisierungsplan kann dabei unterschiedlich granular sein, so umfasst er in einer Variante nur eine Listung der verwendeten Funktionseinheiten und beinhaltet in einer anderen Variante auch die relativen Anordnungen der Funktionseinheiten zueinander.

Beispiele für Funktionseinheiten bzw. von durch die Einheiten zu realisierende Funktionen sind: Pipettierkopf; Reader; Magnetstationen; Lagersysteme; Washer; Pumpmodule; Heizer; Kühler; Schüttler; Thermocycler; Dispenser; Waste Management; Consumable herstellende Einheiten; Probennehmer; Probensammler; Autosampler; Roboter; Carrier; Kompressor; Sealer; Peeler; Piercer; Waagen; Inkubatoren; Zentrifugen; Vakuumstationen; Etikettierer; 3D-Drucker; Mikroskope; Dekontamination; Beleuchtungseinrichtung; Strahlungsgeber; Reinigungseinrichtung (Waschstraße); Ladestationen für einen Carrier (beispielsweise über induktives Laden); "Energiestationen" mit der Möglichkeit, mehrere Stromkreise zu nutzen, um ggf. die Ausfallsicherheit zu gewährleisten, wobei ggf. eine Verteilung auf unterschiedliche Funktionseinheiten stattfindet: Unterbrechungslose Stromversorgung (USV)-Module als Ausfallsicherung für einen Betrieb der Anlage für einen vorgegebenen Zeitraum; Kommunikationsmodule (z. B. für die Kommunikation via WLAN, Bluetooth etc.); Realisierung einer sicheren und ggf. redundanten Kommunikation zwischen einzelnen Funktionseinheiten; Kommunikationseinheiten für die - ggf. gegen Abhören oder Manipulation sichere - Kommunikation mit externen Einheiten (ggf. als Teil der Kommunikation mit dem Hersteller); Monitormodule (mit oder ohne Touch-Funktion; mit oder ohne Eingabe-Möglichkeit); Monitormodule mit einer herausnehmbaren Anzeigeeinheit und/oder Ladeeinheit wie z. B. ein Akku; Steuermodule zur Auswahl und/oder zum Starten von Workflows direkt an der Anlage; Module zur Befestigung und/oder dem Betrieb eines Abluftsystems.

Eine Ausgestaltung besteht darin, dass mehrere Kommunikationskanäle zur Verfügung gestellt werden. Die Kommunikationskanäle können dabei je nach Ausgestaltung der Kommunikation zwischen Nutzern und/oder zwischen einer Plattform und einem Nutzer oder ggf. mehreren Nutzern dienen.

Eine Ausgestaltung umfasst, dass ein Kommunikationskanal derartig bereitgestellt wird, dass ein Nutzer Daten auf eine Plattform laden und für andere Nutzer zur Verfügung stellen kann. Der Nutzer lädt somit in dieser Ausgestaltung eigene oder selbst bearbeitete Daten hoch auf eine Plattform. Zudem gibt der Nutzer diese Daten frei für andere Nutzer. Er stellt somit seine Daten und seine Informationen anderen Nutzern zur Verfügung.

Die Möglichkeit des Hochladens und Freigebens von Daten wird in einer Ausgestaltung dadurch ergänzt, dass in dem Fall, dass auf Daten, die von einem Nutzer auf die Plattform geladen worden sind, von einem anderen Nutzer zugegriffen wird, der Nutzer eine Vergütung erhält. In dieser Ausgestaltung erhält der Nutzer somit einen Anreiz, seine Daten offen zu legen. Überdies wird er auch dazu motiviert, seine Daten auf solche Themen zu beziehen, die vom allgemeinen Interesse sind, denn damit steigert er die Wahrscheinlichkeit, dass andere Nutzer auf seine Daten zugreifen.

In einer weiteren ergänzenden oder alternativen Ausgestaltung wird dem Nutzer ein Anreiz für das Hochladen seiner Daten dadurch geboten, dass eine Anzahl der Fälle, dass auf Daten, die von dem Nutzer auf die Plattform geladen worden sind, von anderen Nutzern zugegriffen wird, protokolliert wird, und dass in dem Fall, dass die Anzahl der Fälle einen vorgegebenen Grenzwert übersteigt, dem Nutzer eine Belobigung zugesprochen wird. Der Nutzer erhält somit z. B. einen Award, wenn er möglichst viele Nutzer mit seinen Daten anspricht und zum Zugriff animiert.

Eine Ausgestaltung ist dadurch gekennzeichnet, dass der Kommunikationskanal derartig bereitgestellt wird, dass ein Nutzer Nutzungsdaten betreffend einer Nutzung einer Anlage über den Kommunikationskanal verfügbar macht. In dieser Ausgestaltung wird darauf Rücksicht genommen, dass ein Nutzer bereits über eine Anlage mit vorzugsweise wenigstens einer Funktionseinheit verfügt. Aus der Nutzung der Anlage und/oder der Funktionseinheit ergeben sich Nutzungsdaten. Die Nutzungsdaten umfassen z. B. die Betriebsdauer oder Bedingungen, denen die Anlage ausgesetzt war (z. B. Temperatur, Luftfeuchtigkeit, ggf. Ausfälle der Stromversorgung, Reinigungsprozesse etc.). Alternativ oder ergänzend können auch umfassendere Daten betroffen sein. Dient z. B. die Anlage der Verarbeitung oder Behandlung von Substanzen, für die Verbrauchsgegenstände oder Verbrauchsmaterialien erforderlich sind, so beziehen sich die Nutzungsdaten beispielsweise auf den Zeitraum, innerhalb dessen die Verbrauchsgegenstände und/oder -materialen nachgefüllt werden müssen. Andere Nutzungsdaten beziehen sich beispielsweise auf Informationen über die Anlage an sich. Die unterschiedlichen Nutzungsdaten werden von dem Nutzer über den Kommunikationskanal verfügbar gemacht. In einer Variante überträgt der Nutzer aktiv die Nutzungsdaten z. B. auf eine Plattform. In einer alternativen oder ergänzenden Variante erlaubt der Nutzer den Zugriff auf die Nutzungsdaten, indem z. B. die Plattform die Nutzungsdaten oder einen (freigegebenen) Teil der Nutzungsdaten abgreifen kann. Die Nutzungsdaten erlauben es beispielsweise festzustellen, mit welchen oder mit welchen wie modifizierten Funktionseinheiten der Nutzer seine Anlage effektiver betreiben könnte.

Eine weitere Ausgestaltung besteht darin, dass von einer Plattform den Nutzern Daten über vorhandene Funktionseinheiten und/oder Realisierungspläne bereitgestellt werden. Von der Plattform können in dieser Ausgestaltung die Nutzer - vorzugsweise über die bereitgestellten Kommunikationskanäle - Daten beziehen, die bereits vorhandene Funktionseinheiten beschreiben oder bei denen es sich um vorhandene Realisierungspläne handelt. Der Nutzer erhält also Informationen, von denen ausgehend eigene Daten erzeugt oder modifiziert werden können.

Eine alternative oder ergänzende Ausgestaltung sieht vor, dass einem Nutzer in Abhängigkeit von einem Protokoll mindestens ein passender Realisierungsplan angeboten wird. In dieser Ausgestaltung übermittelt der Nutzer beispielsweise ein Analyse- und/oder Bearbeitungs-Protokoll an eine Plattform. In der Plattform wird erkannt, ob es für dieses Protokoll schon einen identisch oder zumindest mit hinreichender Ähnlichkeit passenden Realisierungsplan gibt, oder es wird ein passender Realisierungsplan generiert. Dieser Plan wird dann dem Nutzer zur Verfügung gestellt.

In einer weiteren Ausgestaltung wird in dem Fall, dass ein Nutzer einen Realisierungsplan auf eine Plattform geladen hat, eine Realisierbarkeit des Realisierungsplans in Bezug auf vorhandene Funktionseinheiten und/oder in Bezug auf zu modifizierende Funktionseinheiten und/oder in Bezug auf neu zu erzeugende Funktionseinheiten ermittelt. Bei dieser Ausgestaltung wird somit kritisch hinterfragt, ob sich ein Realisierungsplan mit den vorhandenen Funktionseinheiten oder mit zu modifizierenden oder gar erst zu erzeugenden Funktionseinheiten auch in der Realität umsetzen lässt. Es wird also eine Art von Machbarkeitsstudie durchgeführt. Diese Auswertung kann alternativ beim Nutzer, z. B. in einem Konfigurationstool während der Erstellung des Realisierungsplan erfolgen. Das Ergebnis der Ermittlung der Realisierbarkeit wird dem Nutzer vorzugsweise mitgeteilt. Alternativ oder ergänzend werden Optimierungen an dem Realisierungsplan vorgenommen.

In einer alternativen oder ergänzenden Ausgestaltung wird in dem Fall, dass von den Nutzern über den Kommunikationskanal übersendete Daten Informationen über vorhandene Funktionseinheiten aufweisen, den Nutzern ein Hinweis auf eine Bezugsquelle gegeben. Der Hinweis auf die Bezugsquelle kann z. B. in einem Link auf einen Internet-Shop sein.

Weiterhin löst die Erfindung die Aufgabe durch eine Plattform, die Nutzern mindestens einen Kommunikationskanal für ein Übermitteln von Daten bereitstellt und die derartig ausgestaltet ist, dass sie das Verfahren nach einem der vorangehenden oder folgenden Ausgestaltungen ausführt. Die Erläuterungen zum Verfahren gelten entsprechend auch für die Plattform. Umgekehrt gelten die Ausführungen und Ausgestaltungen der Plattform entsprechend auch für das Verfahren.

Die Erfindung wird anhand der nachfolgenden Figuren näher erläutert.
- Fig. 1: zeigt schematisch das Umfeld, in welchem das Verfahren zur Anwendung kommt,
- Fig. 2: zeigt schematisch die Verarbeitung von Daten,
- Fig. 3: zeigt schematisch eine Anlage aus dem Analysebereich und
- Fig. 4: zeigt schematisch eine Anwendung im Bereich der Prozess- und Automatisierungstechnik.

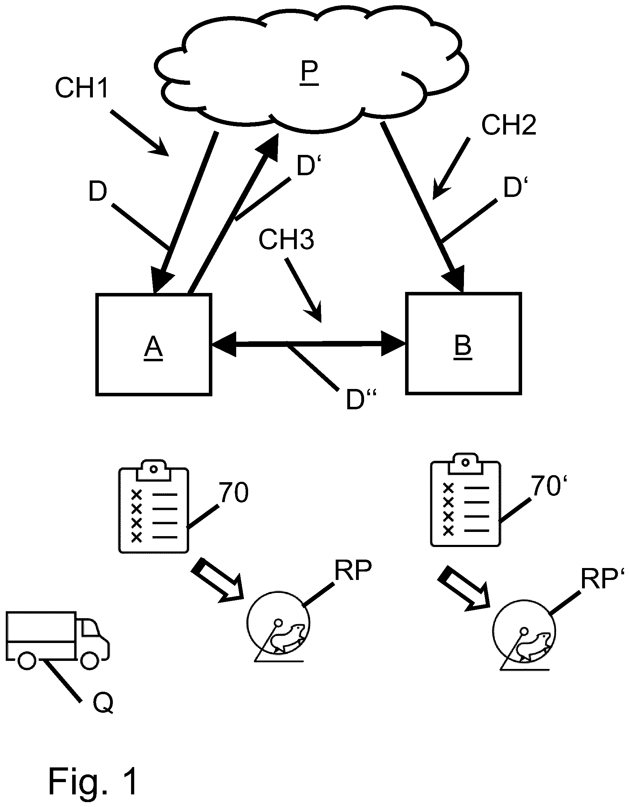

Die Fig. 1 zeigt schematisch, wie von einer Plattform P drei Kommunikationskanäle CH1, CH2, CH3 zur Verfügung gestellt werden. Zwei Kanäle CH1, CH2 dienen dabei der Kommunikation zwischen der Plattform P und zwei Nutzern A, B. Der dritte Kanal CH3 erlaubt die Kommunikation zwischen den Nutzern A, B.

Einer der Nutzer A bezieht von der Plattform P Daten D, die er nach seinen Ansprüchen modifiziert und als geänderte Daten D' an die Plattform P kommuniziert. Auf diese Daten D' - ggf. bereinigt um persönliche Daten des Nutzers A oder umformatiert usw. - greift der andere Nutzer B zu und lädt sie sich somit über seinen Kanal CH2 herunter.

Die beiden Nutzer A, B tauschen über ihren eigenen Kommunikationskanal CH3 Daten D" aus, die sich z. B. auf ihre Anwendungsfälle oder auf die von ihnen verwendeten Funktionseinheiten beziehen. Dabei sei in diesem Beispiel jeder Nutzer daran interessiert, dass er ein Protokoll 70, 70' in einen Realisierungsplan RP, RP' umsetzt. Der Realisierungsplan RP, RP' umfasst dabei die für die Abarbeitung des Protokolls 70, 70' notwendigen Funktionseinheiten (alternative Bezeichnung: Komponenten oder Module) und ggf. auch deren relativen Anordnungen zueinander.

In dem Beispiel hat z. B. die Kommunikation mit den zwischen den Nutzern A, B ausgetauschten Daten D" dazu geführt, dass der Nutzer B erkannt hat, dass er für sein Protokoll 70' vorzugsweise auf die Daten D' zugreift, die der andere Nutzer A in Bezug auf sein Protokoll 70 erzeugt und auf die Plattform P hochgeladen hat. Die beiden Nutzer A, B haben sich also beispielsweise hinsichtlich Ähnlichkeiten oder Unterschiede ihrer Protokolle 70, 70' unterhalten.

Die Protokolle oder Analyse- und/oder Bearbeitungs-Protokolle 70, 70' beziehen sich dabei ganz allgemein auf Abläufe, wie Proben in der jeweiligen Anlage zu analysieren und/oder zu bearbeiten sind.

Zusätzlich umfasst das Umfeld des Verfahrens hier noch eine Quelle Q für die Funktionseinheiten. Dies ist beispielsweise der Hersteller oder ein Großhändler. Der Zugriff darauf erfolgt beispielsweise über das Internet oder über einen Internet-Shop.

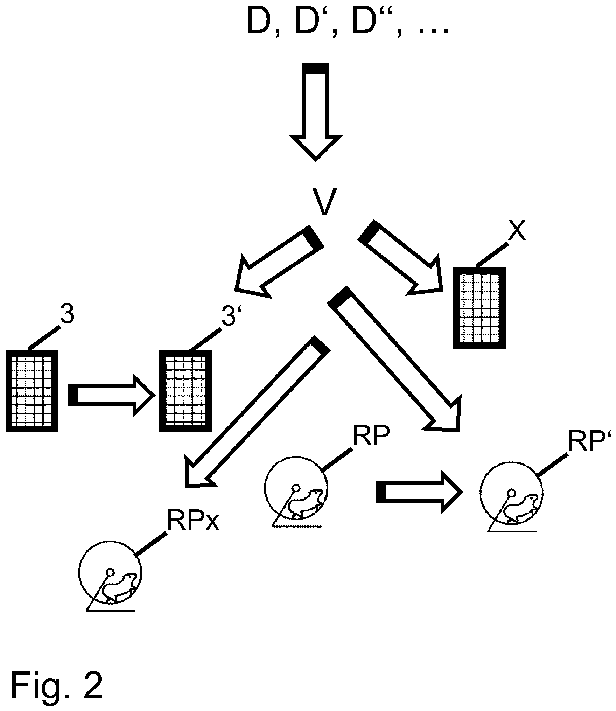

Die Fig. 2 zeigt, wie die Daten D, D', D" auswertet werden, um ein Identifikationsergebnis V zu erzeugen.

Dabei wurde - je nach Fall - erkannt, ob eine Funktionseinheit 3 zu modifizieren ist, damit sich eine modifizierte Funktionseinheit 3' ergibt. Die Modifikation bezieht sich z. B. auf Abmessungen, auf Zugänglichkeiten, auf Genauigkeiten, auf die Möglichkeiten zum Reinigen, auf die Möglichkeit zur Verbindung mit anderen Funktionseinheiten usw.

Es kann aber auch erkannt werden, dass eine neue Funktionseinheit X erzeugt werden sollte. Andere Erkenntnisse beziehen sich auf die Realisierungspläne, sodass z. B. aus einem vorhandenen Realisierungsplan RP ein modifizierter Realisierungsplan RP` erzeugt wird. Oder es kann erkannt worden sein, dass für ein Protokoll oder eine Gruppe von Protokollen ein neuer Realisierungsplan RPx zu erzeugen ist. Die Protokolle beziehen sich z. B. auf die Analyse von Blut oder auf Genanalyse.

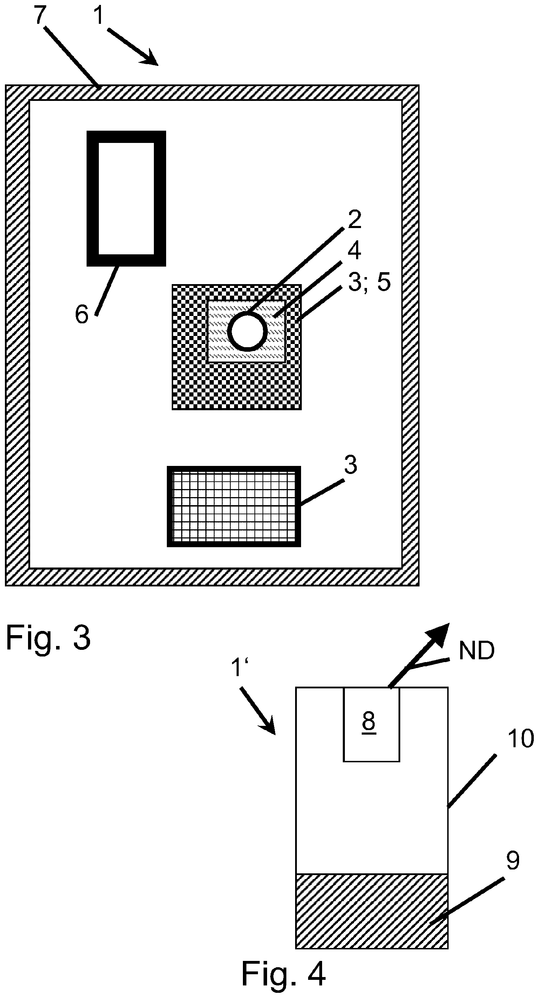

Die Fig. 3 zeigt schematisch eine Anlage 1, in der Proben 2 behandelt werden.

Die Behandlung besteht dabei z. B. in einer Aufbereitung - z. B. Reinigung, Auswaschung, Aufspalten in Komponenten - und einer anschließenden Untersuchung, z. B. in Form einer Analyse, ob sich eine bestimmte Substanz in der Probe 2 befindet. Vorzugsweise handelt es sich bei den Anlagen 1 jedoch um Anlagen zur Analyse der Proben 2. Je nach Größe oder Funktionalitäten kann die Anlage 1 alternativ auch als Gerät bezeichnet werden.

Die Behandlung der Probe 2 erfolgt nach einem Protokoll 70, in welchem z. B. die einzelnen Behandlungsschritte mit der Probe, aber z. B. auch vorbereitende oder sich anschließende - z. B. für eine Reinigung - Schritte aufgeführt werden. Die einzelnen Schritte sind dabei Funktionseinheiten 3 zugeordnet, die die Schritte als Funktion ausführen oder mit anderen Funktionseinheiten 3 zusammenwirken, um die anderen Funktionseinheiten 3 zu unterstützen.

Muss also z. B. eine Probe 2 zunächst gefiltert werden, so ist eine Funktionseinheit 3 als Filter ausgestaltet. Für eine Temperierung der Probe 2 kann eine Heiz- oder Kühleinheit als Funktionseinheit 3 vorhanden sein. Schließlich kann eine Funktionseinheit 3 auch als Analyseeinheit, z. B. als Massenspektrometer ausgeführt sein. In diesem Fall würden z. B. die anderen Funktionseinheiten 3 der Aufbereitung der Probe 2 für die Analyse dienen.

Die erzeugte Anlage 1 setzt sich also aus mehreren Funktionseinheiten 3 zusammen. Drei besondere Gruppen der Funktionseinheiten 3 sind hier angedeutet als Transporteinheit 4, als Bodeneinheit 5 sowie als Lagerungseinheit 6 für die Probe 2. Die Transporteinheit 4 bewegt hier die Probe 2 über die Bodeneinheiten 5 hinweg durch die Anlage 1 und bringt sie somit von der einen Funktionseinheit 3 zu der anderen. Die Funktionseinheiten 3, 4, 5, 6 sind dabei in einer Strukturvorrichtung 7, z. B. in Form eines Schranks eingebettet.

Die Fig. 4 zeigt eine Anlage 1' aus dem Bereich der Prozess- und Automatisierungstechnik.

Dabei überwacht eine Funktionseinheit 8 in Form eines Sensors unter Anwendung des Laufzeitverfahrens den Füllstand eines Mediums 9 in einem Behälter 10. Aus dem Betrieb des Sensors 8 ergeben sich Nutzungsdaten ND, die sich z. B. auf die aktive Zeit des Sensors 8, auf die Messwerte, auf die Energieversorgung oder z. B. auf die Messbedingungen (Umgebungstemperatur, Luftfeuchtigkeit usw.) beziehen.

### Bezugszeichenliste

- 1, 1': Anlage
- 2: Probe
- 3: Funktionseinheit
- 4: Funktionseinheit in Form einer Transporteinheit
- 5: Funktionseinheit in Form einer Bodeneinheit
- 6: Funktionseinheit in Form einer Lagerungseinheit
- 7: Funktionseinheit in Form einer Strukturvorrichtung
- 8: Funktionseinheit in Form eines Sensors
- 9: Medium
- 10: Behälter
- A, B: Nutzer
- Q: Bezugsquelle
- CH1, CH2, CH3: Kommunikationskanal
- D, D', D": Daten
- ND: Nutzungsdaten
- RP, RP', RPx: Realisierungsplan
- P: Plattform
- 70, 70': Protokoll

## Patentansprüche

1. Verfahren zur Erzeugung und/oder Modifizierung von Funktionseinheiten (3, 4, 5, 6, 7, X) für eine modulare Anlage (1) zur Behandlung und/oder Analyse einer Probe (2) und/oder von Funktionseinheiten (8, X) für eine modulare Anlage (1') der Prozess- und Automatisierungstechnik und/oder zur Erzeugung und/oder Modifizierung von Realisierungsplänen (RP, RP', RPx), die eine Umsetzung von Analyse- und/oder Bearbeitungs-Protokollen (70, 70') in modularen Anlagen (1, 1') beschreiben,
wobei das Verfahren zumindest die folgenden Schritte umfasst:
dass für Nutzer (A, B) mindestens ein Kommunikationskanal (CH1, CH2, CH3) für ein Übermitteln von Daten (D, D', D", ND) bereitgestellt wird,
dass über den Kommunikationskanal (CH1, CH2, CH3) übermittelte Daten (D, D', D", ND) verarbeitet und ein Identifikationsergebnis (V) dahingehend erzeugt wird, ob Funktionseinheiten (X) fehlen und/oder ob Eigenschaften von vorhandenen Funktionseinheiten (3, 4, 5, 6, 7, 8) zu modifizieren sind und/oder ob Realisierungspläne (RPx) fehlen und/oder ob vorhandene Realisierungspläne (RP) zu modifizieren sind, und
dass ausgehend von dem Identifikationsergebnis (V) fehlende Funktionseinheiten (X) erzeugt und/oder Eigenschaften von vorhandenen Funktionseinheiten (3, 4, 5, 6, 7, 8) modifiziert und/oder fehlende Realisierungsplänen (RPx) erzeugt und/oder vorhandene Realisierungspläne (RP) modifiziert werden.

2. Verfahren nach Anspruch 1,
wobei mehrere Kommunikationskanäle (CH1, CH2, CH3) zur Verfügung gestellt werden.

3. Verfahren nach Anspruch 1 oder 2,
wobei ein Kommunikationskanal (CH3) der Kommunikation zwischen Nutzern (A, B) dient.

4. Verfahren nach einem der Ansprüche 1 bis 3,
wobei ein Kommunikationskanal (CH1, CH2) der Kommunikation zwischen einer Plattform (P) und einem Nutzer (A, B) dient.

5. Verfahren nach einem der Ansprüche 1 bis 4,
wobei der Kommunikationskanal (CH1) derartig bereitgestellt wird, dass ein Nutzer (A) Daten (D') auf eine Plattform (P) laden und für andere Nutzer (B) zur Verfügung stellen kann.

6. Verfahren nach Anspruch 5,
wobei das Verfahren den folgenden Schritt umfasst,
dass in dem Fall, dass auf Daten (D'), die von einem Nutzer (A) auf die Plattform (P) geladen worden sind, von einem anderen Nutzer (B) zugegriffen wird, der Nutzer (A) eine Vergütung erhält.

7. Verfahren nach Anspruch 5 oder 6,
wobei das Verfahren den folgenden Schritt umfasst,
dass eine Anzahl der Fälle, dass auf Daten (D'), die von einem Nutzer (A) auf die Plattform (P) geladen worden sind, von anderen Nutzern (B) zugegriffen wird, protokolliert wird, und
dass in dem Fall, dass die Anzahl der Fälle einen vorgegebenen Grenzwert übersteigt, dem Nutzer (A) eine Belobigung zugesprochen wird.

8. Verfahren nach einem der Ansprüche 1 bis 7,
wobei der Kommunikationskanal (CH1) derartig bereitgestellt wird, dass ein Nutzer (A) Nutzungsdaten (ND) betreffend einer Nutzung einer Anlage (1, 1') über den Kommunikationskanal (CH1) verfügbar macht.

9. Verfahren nach einem der Ansprüche 1 bis 8,
wobei das Verfahren als weiteren Schritt umfasst:
dass von einer Plattform (P) den Nutzern (A, B) Daten (D, D') über vorhandene Funktionseinheiten (3, 4, 5, 6, 7, 8) und/oder Realisierungspläne (RP, RP') bereitgestellt werden.

10. Verfahren nach einem der Ansprüche 1 bis 9,
wobei das Verfahren als weiteren Schritt umfasst:
dass einem Nutzer (A) in Abhängigkeit von einem Protokoll (70) mindestens ein passender Realisierungsplan (RP) angeboten wird.

11. Verfahren nach einem der Ansprüche 1 bis 10,
wobei das Verfahren als weiteren Schritt umfasst:
dass in dem Fall, dass ein Nutzer (A) einen Realisierungsplan (RP`) auf eine Plattform (P) geladen hat, eine Realisierbarkeit des Realisierungsplans (RP') in Bezug auf vorhandene Funktionseinheiten (3, 4, 5, 6, 7, 8) und/oder in Bezug auf zu modifizierende Funktionseinheiten (3, 4, 5, 6, 7, 8) und/oder in Bezug auf neu zu erzeugende Funktionseinheiten (X) ermittelt wird.

12. Verfahren nach einem der Ansprüche 1 bis 11,
wobei das Verfahren als weiteren Schritt umfasst:
dass in dem Fall, dass von den Nutzern (A, B) über den Kommunikationskanal (CH1, CH2, CH3) übersendete Daten (D, D', D") Informationen über vorhandene Funktionseinheiten (3, 4, 5, 6, 7, 8) aufweisen, den Nutzern (A, B) ein Hinweis auf eine Bezugsquelle (Q) gegeben wird.

13. Plattform (P),
wobei die Plattform (P) Nutzern (A, B) mindestens einen Kommunikationskanal (CH1, CH2, CH3) für ein Übermitteln von Daten (D, D', D", ND) bereitstellt, und wobei die Plattform (P) derartig ausgestaltet ist, dass Verfahren nach einem der Ansprüche 1 bis 12 auszuführen.
